# EUROPEAN PATENT APPLICATION

(11) **EP 4 736 828 A1**
(43) Date of publication of application: **06.05.2026**
(21) Application number: 24832165.5
(22) Date of filing: 17.01.2024
(51) Int. Cl.: A61G 5/10, A61G 5/12, B60N 2/14, B60N 2/16

(54) **POSTURE CHANGING APPARATUS HAVING ARMRESTS, FOR WHEELCHAIR**

(30) Priority: 27.06.2023 KR 20230082547
(71) Applicant: Korea Institute of Machinery & Materials, Daejeon 34103 (KR)
(72) Inventor: KIM, Seyoung, Daejeon 34119 (KR); KIM, Kwang Joon, Daejeon 34107 (KR); PARK, Cheol-hoon, Daejeon 34022 (KR); PARK, Jongwoo, Sejong 30062 (KR); HAN, Byoung-Kil, Daejeon 34130 (KR); JUNG, Hyun Mok, Daejeon 34023 (KR); SEO, Hyunuk, Seoul 08711 (KR); PARK, Chan Hun, Daejeon 35248 (KR)
(74) Representative: Witte, Weller & Partner Patentanwälte mbB
(86) International application number: PCT/KR2024/000822
(87) International publication number: WO 2025/005377

(57) **Abstract**

According to an embodiment of the present disclosure, a posture changing apparatus having armrests for a wheelchair includes a seat support supporting hips of a user, a leg support portion extending downward from the seat support and installed to be rotatable with respect to the seat support, a backrest portion extending upward from the seat support and installed to be rotatable with respect to the seat support, a base disposed under the seat support and supporting the seat support, folding driving units rotating the leg support portion and the backrest portion with respect to the seat support, and armrests rotatably coupled to the folding driving units, wherein the folding driving units each include a first folding link and a second folding link that are rotatably coupled to the backrest portion and the leg support portion and are spaced apart from each other in a height direction of the leg support portion, and each of the armrests is rotatably coupled to the first folding link, and is supported by the second folding link.

## Description

### Technical Field

The present disclosure relates to a posture changing apparatus for a wheelchair, which assists a user to change his/her posture while seating on the wheelchair, and more specifically, to a posture changing apparatus having armrests for a wheelchair.

### Background Art

In the case of care receivers who are unable to bathe on their own, e.g., elderly people, severely ill patients, and disabled people, the care receivers may bathe with assistance from a caregiver. Recently, owing to increase in the elderly population, the number of care receivers who are difficult to lie down in the bed or to move on their own is increasing, and thus, workload of caregivers is increasing. Accordingly, various apparatuses for improving convenience of care receivers and caregivers are being introduced.

Among these apparatuses, a wheelchair is a moving-assistant device for helping disabled people, patients, or elderly people move around comfortably.

The wheelchair includes a seat, a backrest, and wheels on opposite sides of the seat, and manual wheelchairs that are moved by a passenger pushing those wheels on their own or an assistant pushing the wheelchair from behind the wheelchair are mainly used.

Recently, electric wheelchairs that do not require manual work to move the wheels have been developed a lot, and various products have been already released and sold.

An electric wheelchair drives wheels generally by using a motor, and the wheelchair that is movable facilitates disabled people, patients, or elderly people to move easily.

However, although an apparatus simply provided for moving only enables a user with restricted mobility to easily move, but additional posture change for standing activities and sufficient blood circulation is impossible.

In particular, in the case of severely disabled people or elderly people, it is difficult to periodically change their postures in order to prevent bedsore, as well as transferring to/from the wheelchair, and to this end, a caregiver has to standby at all times, which is inconvenient.

Accordingly, electric wheelchairs allowing users to change their postures have been developed, but the electric wheelchairs according to the related art are large in volume and need a large support area, which makes miniaturization and lightweight of the wheelchair difficult.

Also, during posture changing of the electric wheelchair, armrests may not rotate or may move to wrong positions, so that a control panel installed on the armrest may not be properly touched.

### Disclosure of Invention

### Technical Problem

The present disclosure provides a posture changing apparatus for a wheelchair, which is able to easily control armrests during posture changing. Also, the present disclosure provides a posture changing apparatus for a wheelchair, which is compact, is able to perform posture changing easily, and is attachable to/detachable from a two-wheel wheelchair.

### Solution to Problem

A posture changing apparatus having armrests for a wheelchair, according to an embodiment of the present disclosure, includes a seat support supporting hips of a user, a leg support portion extending downward from the seat support and installed to be rotatable with respect to the seat support, a backrest portion extending upward from the seat support and installed to be rotatable with respect to the seat support, a base disposed under the seat support and supporting the seat support, folding driving units rotating the leg support portion and the backrest portion with respect to the seat support, and armrests rotatably coupled to the folding driving units, wherein the folding driving units each include a first folding link and a second folding link that are rotatably coupled to the backrest portion and the leg support portion and are spaced apart from each other in a height direction of the leg support portion, and each of the armrests is rotatably coupled to the first folding link, and is supported by the second folding link.

### Advantageous Effects of Invention

As described above, in a posture changing apparatus for a wheelchair according to an aspect of the present disclosure, an armrest is rotatably coupled to a first folding link and is supported by a second folding link so that, when a posture of a user changes, the armrest may be also easily controlled.

Also, the posture changing apparatus for a wheelchair, according to an aspect of the present disclosure, may variously change the posture of the user by using a vertical movement driving unit, a rotation driving unit, and a folding driving unit, and moreover, includes the folding driving unit to simultaneously transform a leg support portion and a backrest portion.

Also, because the vertical movement driving unit includes two vertical movement links and a vertical movement cylinder to form a parallelogram link structure, and thus, gravitational torque is structurally absorbed and gravity of joints is independently compensated for, thereby implementing posture change stably and easily.

Also, the vertical movement link has a vertical movement spring installed thereon to be easily transformed with a small force, and a backrest plate and a footrest are moved while engaging with the folding link to remove joint mismatch between the user and the apparatus, thereby increasing user convenience.

### Brief Description of Drawings

FIG. 1 is a perspective view showing a posture changing apparatus for a wheelchair, according to an embodiment of the present disclosure.
FIG. 2 is a sideview showing a posture changing apparatus for a wheelchair, according to an embodiment of the present disclosure.
FIG. 3 is a diagram showing a vertical movement driving unit and a rotation driving unit according to an embodiment of the present disclosure.
FIG. 4 is a diagram showing a folding driving unit and a rotation driving unit according to an embodiment of the present disclosure.

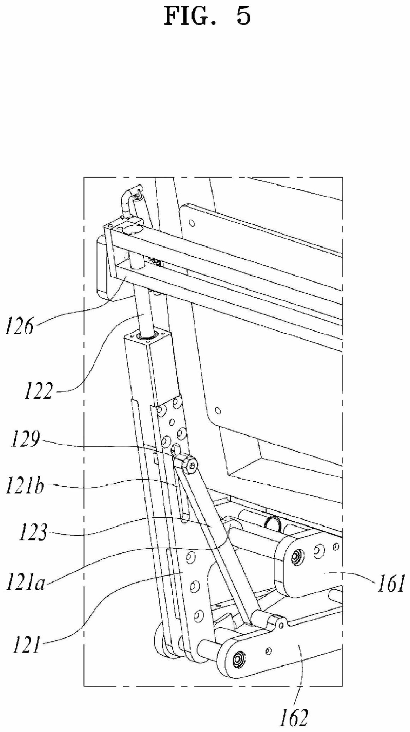

FIG. 5 is a diagram showing a backrest according to an embodiment of the present disclosure.

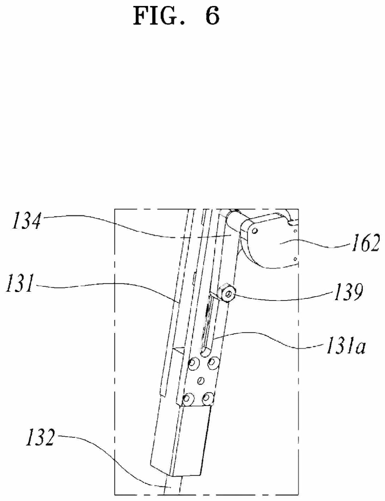

FIG. 6 is a diagram showing a part of a leg support portion according to an embodiment of the present disclosure.
FIG. 7 is a diagram showing an armrest, in a rotated state, of a posture changing apparatus for a wheelchair, according to an embodiment of the present disclosure.
FIG. 8 is a sideview showing a posture changing apparatus for a wheelchair, according to an embodiment of the present disclosure, in a laid state.
FIG. 9 is a side view showing a posture changing apparatus for a wheelchair, according to an embodiment of the present disclosure, in an erected state.

### Best Mode for Carrying out the Invention

A posture changing apparatus having armrests for a wheelchair, according to an embodiment of the present disclosure, includes a seat support supporting hips of a user, a leg support portion extending downward from the seat support and installed to be rotatable with respect to the seat support, a backrest portion extending upward from the seat support and installed to be rotatable with respect to the seat support, a base disposed under the seat support and supporting the seat support, folding driving units rotating the leg support portion and the backrest portion with respect to the seat support, and armrests rotatably coupled to the folding driving units, wherein the folding driving units each include a first folding link and a second folding link that are rotatably coupled to the backrest portion and the leg support portion and are spaced apart from each other in a height direction of the leg support portion, and each of the armrests is rotatably coupled to the first folding link, and is supported by the second folding link.

According to an embodiment of the present disclosure, the armrest may have a position protrusion that protrudes backward, and the second folding link may have a support pillar that is coupled to the position protrusion so as to support the position protrusion.

According to an embodiment of the present disclosure, a fixing magnet may be installed on the position protrusion, the fixing magnet being coupled to the support pillar via a magnetic force.

According to an embodiment of the present disclosure, the armrest may include an armrest base on which an arm of a user is seated, and an armrest frame protruding from the armrest base and coupled to the first folding link, and a positioning magnet may be installed on the first folding link, and a magnetic plate coupled to the positioning magnet is installed on the armrest frame.

According to an embodiment of the present disclosure, the posture changing apparatus may further include a vertical movement driving unit that vertically moves the seat support with respect to the base, and a rotation driving unit that rotates the seat support with respect to the vertical movement driving unit.

According to an embodiment of the present disclosure, one end portion of the folding driving unit in a lengthwise direction may be fixed to the backrest portion, and an opposite end portion of the folding driving unit in the lengthwise direction may be fixed to the leg support portion.

According to an embodiment of the present disclosure, the folding driving unit may include a folding cylinder of which one end portion in a lengthwise direction is connected to the first folding link and an opposite end portion in the lengthwise direction is connected to the second folding link.

According to an embodiment of the present disclosure, a folding spring pushing the second folding link against the first folding link may be installed on the first folding link and the second folding link.

According to an embodiment of the present disclosure, the leg support portion may include a footrest upper frame connected to the first folding link and the second folding link, the backrest portion comprises a backrest frame connected to the first folding link and the second folding link, and coupling points of the footrest upper frame and the backrest frame that are connected to the first folding link and the second folding link may be located respectively on four vertices of a parallelogram.

According to an embodiment of the present disclosure, the rotation driving unit may be coupled to a side surface of the first folding link, and the vertical movement driving unit may be coupled to a rear surface of the rotation driving unit.

According to an embodiment of the present disclosure, the rotation driving unit may connect the vertical movement driving unit to the folding driving unit and rotates the seat support via the folding driving unit.

According to an embodiment of the present disclosure, two of the folding driving units may be installed under the seat support, and the vertical movement driving unit may be installed between the folding driving units that are spaced apart from each other.

According to an embodiment of the present disclosure, the vertical movement driving unit may include a first vertical movement link connecting the base to the rotation driving unit, a second vertical movement link connecting the base to the rotation driving unit and being spaced apart from the first vertical movement link, and a vertical movement cylinder of which one end portion in a lengthwise direction is connected to the first vertical movement link and an opposite end portion in the lengthwise direction is connected to the second vertical movement link.

According to an embodiment of the present disclosure, a vertical movement spring pushing the second vertical movement link against the first vertical movement link may be installed on the first vertical movement link and the second vertical movement link.

According to an embodiment of the present disclosure, connecting points of the rotation driving unit and the base that are connected to the first vertical movement link and the second vertical movement link may be located at four vertices of a parallelogram.

According to an embodiment of the present disclosure, the leg support portion may include a footrest upper frame connected to the first folding link and the second folding link, a pair of footrest lower frames connected to a lower portion of the footrest upper frame, transport rods that are respectively inserted into the pair of footrest lower frames and installed to be movable in a lengthwise direction of the footrest lower frames, footrests connected to lower portions of the transport rods and supporting feet of a user, and a connecting rod coupled to upper portions of the transfer rods so as to connect the transfer rod to the second folding link.

According to an embodiment of the present disclosure, the backrest may include a backrest frame connected to the first folding link and the second folding link, a pair of slider rods that are inserted into the backrest frame and installed to be movable in a lengthwise direction of the backrest frame, a backrest plate coupled to the slider rods and supporting user's back, and transport rods respectively coupled to the pair of slider rods and connecting the slider rods to the second folding link.

In an embodiment of the present disclosure, a first distance between the pair of footrest lower frames may be less than a second distance between the pair of slider rods.

### Mode for the Invention

As the present disclosure allows for various changes and numerous embodiments, particular embodiments will be illustrated and described in detail in the written description. However, this is not intended to limit the present disclosure to particular modes of practice, and it is to be appreciated that all modifications, equivalents, and/or alternatives that do not depart from the spirit and technical scope are encompassed in the disclosure.

The terms used in the present disclosure are merely used to describe particular embodiments, and are not intended to limit the present disclosure. Singular expressions include plural expressions unless the context clearly means otherwise. In the present disclosure, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Hereinafter, one or more embodiments of the present disclosure will be described in detail with reference to accompanying drawings. Here, it has to be noted that, in the drawings, like elements are indicated by like reference numerals if possible. In addition, detailed descriptions of well-known functions and configurations determined to obscure the gist of the present disclosure will be omitted. For the same reason, in the accompanying drawings, some elements may be exaggerated, omitted, or schematically illustrated.

Hereinafter, a posture changing apparatus for a wheelchair, according to an embodiment of the present disclosure, is described below.

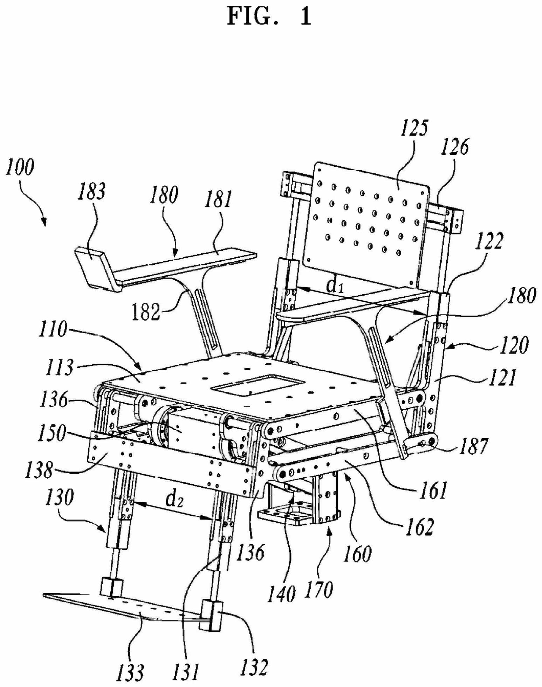

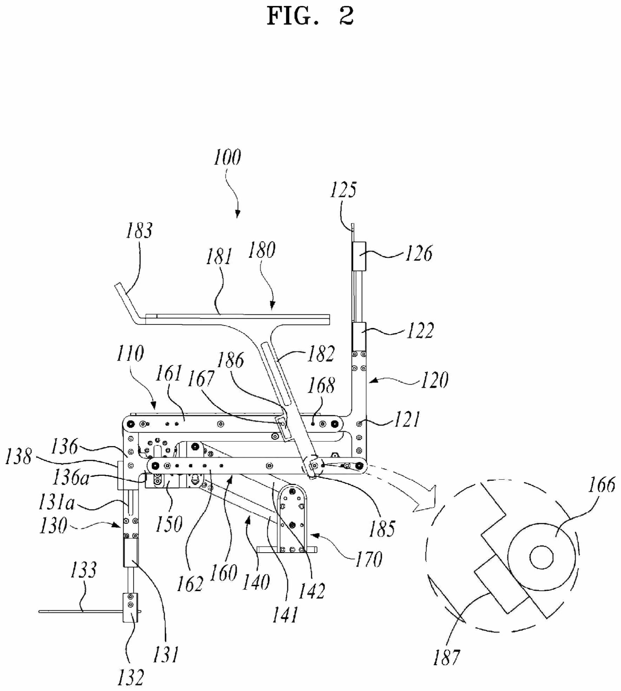

Referring to FIG. 1 and FIG. 2, a posture changing apparatus 100 for a wheelchair, according to an embodiment, may include a seat support 110, a backrest portion 120, a leg support portion 130, a base 170, a vertical movement driving unit 140, a rotation driving unit 150, a folding driving unit 160, and armrests 180. The posture changing apparatus 100 for the wheelchair, according to the embodiment, is an apparatus which is detachably coupled to an electric wheelchair having two wheels or a wheel frame and assists posture change of a user of the electric wheelchair. However, the present disclosure is not limited thereto, and the posture changing apparatus 100 may be applied to a wheelchair having four wheels and a manual wheelchair.

The seat support 110 supports hips of the user and may be fixed to the folding driving unit 160. A cushion, etc. may be installed on the seat support 110. The backrest portion 120 extends upward from the seat support 110 and is installed to be rotatable relative to the seat support 110. The backrest portion 120 may be coupled to the seat support 110 via the folding driving unit 160.

The leg support portion 130 extends downward from the seat support 110 and is installed to be rotatable relative to the seat support 110. The leg support portion 130 may be coupled to the seat support 110 via the folding driving unit 160.

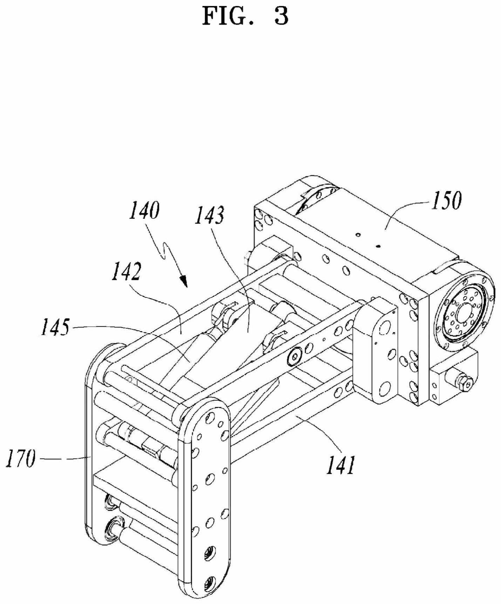

FIG. 3 is a diagram showing the vertical movement driving unit and the rotation driving unit according to an embodiment of the present disclosure.

Referring to FIG. 1 and FIG. 3, the vertical movement driving unit 140 vertically moves the seat support 110 and may be fixed to the base 170. The base 170 may support the vertical movement driving unit 140 from the lower portion of the vertical movement driving unit, and may be formed as a shape of a pillar.

The base 170 may be detachably coupled to the wheelchair or a wheel frame. The wheel frame (not shown) may include two wheels and a traveling motor driving the wheels. Also, the wheel frame (not shown) may further include a support module supporting the traveling motor and the wheels, and one or more auxiliary wheels. Also, the wheel frame (not shown) may include four or more wheels.

The base 170 may be detachably coupled to the wheel frame (not shown) via a bolt, a pin, a clamp, etc. Accordingly, the posture changing apparatus 100 according to the embodiment may be applied to various kinds of wheelchairs.

The vertical movement driving unit 140 may include a first vertical movement link 141, a second vertical movement link 142, a vertical movement cylinder 143, and a vertical movement spring 145. The first vertical movement link 141 and the second vertical movement link 142 connect the base 170 to the rotation driving unit 150 and may be arranged parallel to each other. Also, the first vertical movement link 141 and the second vertical movement link 142 may be rotatably connected to the base 170 and the rotation driving unit 150 and may be spaced from each other with an interval in a height direction. The vertical movement driving unit 140 is located under a center of the seat support 110 in a width direction and may be provided between the folding driving units 160 spaced apart from each other.

The first vertical movement link 141 and the second vertical movement link 142 may each include two rods spaced apart from each other and a support bar supporting the rods, and the vertical movement cylinder 143 and the vertical movement spring 145 may be rotatably coupled to the support bar. The first vertical movement link 141 and the second vertical movement link 142 are arranged parallel to each other and may form a parallelogram link structure. In more detail, connecting points of the rotation driving unit 150 and the base 170 that are connected to the first vertical movement link 141 and the second vertical movement link 142 are located at four vertices of the parallelogram.

The vertical movement cylinder 143 may include an electric motor-based linear actuator, a hydraulic or pneumatic cylinder, and may push or pull the first vertical movement link 141 with respect to the second vertical movement link 142. The vertical movement cylinder 143 may be connected to be adjacent to one end portion of the first vertical movement link 141 in the lengthwise direction and to be adjacent to the opposite end of the second vertical movement link 142 in the lengthwise direction. That is, the vertical movement cylinder 143 may be connected to the rear side of the first vertical movement link 141 at the lower portion and to the front side of the second vertical movement link 142 at the upper portion.

When the vertical movement cylinder 143 pushes the second vertical movement link 142, the rotation driving unit 150 may ascend, and when the vertical movement cylinder 143 pulls the second vertical movement link 142, the rotation driving unit 150 may descend.

Two vertical movement springs 145 are installed on the first vertical movement link 141 and the second vertical movement link 142, and the vertical movement spring 145 may exert the force pushing the second vertical movement link 142 with respect to the first vertical movement link 141. The vertical movement spring 145 may be connected to be adjacent to one end portion of the first vertical movement link 141 in the lengthwise direction and to be adjacent to an opposite end of the second vertical movement link 142 in the lengthwise direction. Here, the vertical movement spring 145 may include a gas spring, but the present disclosure is not limited thereto. The vertical movement spring 145 may be arranged parallel to the vertical movement cylinder 143. When the vertical movement spring 145 is installed as above, the vertical movement spring 145 may compensate for the load, and thus, the seat support 110 may ascend or descend with less force.

The rotation driving unit 150 is fixed to the front portion of the first vertical movement link 141 and the second vertical movement link 142 and may include a motor. The rotation driving unit 150 may rotate the seat support 110 relative to the vertical movement driving unit 140. The rotation driving unit 150 is connected to the seat support 110 via the first folding link 162, and the folding driving unit 160 may be rotated by the rotation driving unit 150.

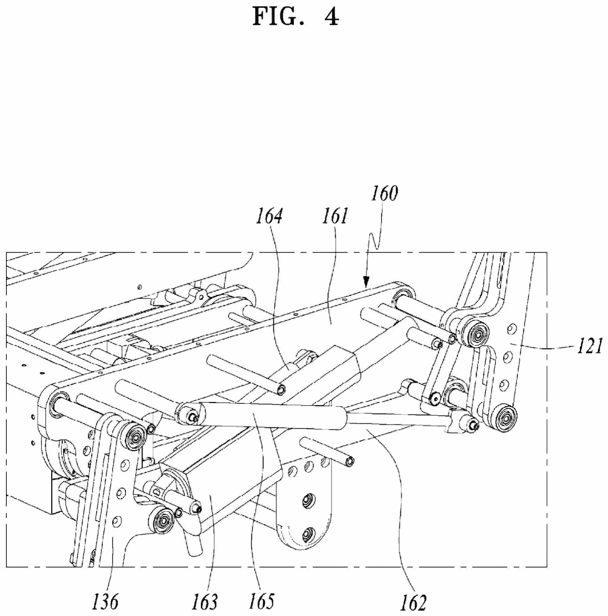

FIG. 4 is a diagram showing the folding driving unit and the rotation driving unit according to an embodiment of the present disclosure.

Referring to FIG. 1 and FIG. 4, two folding driving units 160 are installed under the seat support 110 and are spaced apart from each other in the width direction of the seat support 110. The folding driving unit 160 may rotate the leg support portion 130 and the backrest portion 120 relative to the seat support 110.

One end portion of the folding driving unit 160 is coupled to the backrest portion 120 and the other end portion of the folding driving unit 160 is coupled to the leg support portion 130. Also, an upper end of the folding driving unit 160 may be fixed to the seat support 110.

The folding driving unit 160 may include a first folding link 161, a second folding link 162, a folding cylinder 163, an auxiliary spring 164, and a folding spring 165. The first folding link 161 and the second folding link 162 connect the backrest portion 120 to the leg support portion 130 and may be arranged parallel to each other.

The first folding link 161 and the second folding link 162 may be rotatably connected to the backrest portion 120 and the leg support portion 130 and may be spaced apart from each other in the height direction. The first folding link 161 and the second folding link 162 are arranged in parallel to form a parallelogram link structure. That is, the coupling points of a footrest upper frame 136 and a backrest frame 121 connected to the first folding link 161 and the second folding link 162 are respectively located at four vertices of the parallelogram.

The first folding link 161 and the second folding link 162 each include two rods that are spaced apart from each other and a support bar supporting the rods, and the folding cylinder 163, the auxiliary spring 164, and the folding spring 165 may be rotatably coupled to the support bar.

The first folding link 161 is fixed to the lower portion of the seat support 110 and rotates along with the seat support 110. A protrusion that protrudes downward is formed on the first folding link 161, and the rotation driving unit 150 may be fixed to the protrusion.

The folding cylinder 163 may include an electric motor-based linear actuator, a hydraulic or pneumatic cylinder, and may push or pull the first folding link 161 with respect to the second folding link 162.

The folding cylinder 163 may be connected to be adjacent to one end portion of the first folding link 161 in the lengthwise direction and may be connected to be adjacent to an opposite end portion of the second folding link 162 in the lengthwise direction. That is, the folding cylinder 163 may be connected to the front side of the second folding link 162 at the lower portion and may be connected to the rear side of the first folding link 161 at the upper portion.

When the folding cylinder 163 pushes the second folding link 162, the backrest portion 120 and the leg support portion 130 are unfolded, and when the folding cylinder pulls the second folding link 162, the backrest portion 120 and the leg support portion 130 may be erected.

As described above, according to the embodiment, when the first folding link 161 and the second folding link 162 form the parallelogram link structure and are coupled to the backrest portion 120 and the leg support portion 130, the backrest portion 120 and the leg support portion 130 may be simultaneously unfolded or erected by one folding cylinder 163.

The folding spring 165 that pushes the second folding link 162 relative to the first folding link 161 is installed on the first folding link 161 and the second folding link 162, and the auxiliary spring 164 and the folding spring 165 extend in directions crossing each other. The folding spring 165 may be arranged to cross the folding cylinder 163.

The auxiliary spring 164 assists the force of the rotation driving unit 160 when the rotation driving unit 150 lifts the seat support 110.

The backrest portion 120 may include the backrest frame 121 connected to the folding driving unit 160, a slider rod 122 which is inserted into the backrest frame 121 and installed to be movable in the lengthwise direction of the backrest frame 121, a backrest plate 125 coupled to the slider rod 122 and supporting the back of the user, and a transport rod 123 coupled to the lower portion of the slider rod 122 and connecting the slider rod 122 to the first folding link 161.

The transport rod 123 and the slider rod 122 are coupled via a pin 129, and the backrest frame 121 may have a guide hole 121b into which the pin 129 is inserted and moved. Also, the backrest portion 120 may further include a support rod 126 connecting a pair of slider rods 122 that are spaced apart from each other.

When the backrest portion 120 is unfolded, the second folding link 162 is moved downward with respect to the seat support 110 and the first folding link 161. Accordingly, the transport rod 123 is coupled to the second folding link 162 so as to, when the backrest portion 120 is unfolded, pulls the slider rods 122, and accordingly, the backrest plate 125 is moved downward along the backrest frame 121. Also, when the backrest portion 120 is erected by the folding driving unit 160, the backrest plate 125 may be pushed and moved upward by the transport rod 123.

As described above, according to the embodiment, when the backrest portion 120 is unfolded, the backrest plate 125 may move downward and support the back of the user, and when the backrest portion 120 is erected, the backrest plate 125 moves upward and stably supports the back of the user.

The leg support portion 130 includes the footrest upper frames 136 connected to the first folding link 161 and the second folding link 162, a front support 138 fixed to the front portion of the footrest upper frame 136, a footrest lower frame 131 fixed to the front support 138 and extending downward, a transport rod 132 inserted into the footrest lower frame 131 and installed to be movable in the lengthwise direction of the footrest lower frame 131, a footrest 133 coupled to the lower portion of the transport rod 132 and supporting the foot of the user, and a connecting rod 134 coupled to the upper portion of the transport rod 132 and connecting the transport rod 132 to the second folding link 162.

The footrest upper frame 136 is coupled to the first folding link 161 and the second folding link 162, and supports the first folding link 161 and the second folding link 162. The footrest upper frame 136 may include a protrusion 136a that protrudes backward and is coupled to the second folding link 161.

The front support 138 connecting the footrest upper frames 136 may be installed in front of the footrest upper frames 136. The footrest lower frame 131 is fixed to the front support 138, and a pair of footrest lower frames 131 extend downward from the front support 138. The connecting rod 134 is coupled to each of the pair of footrest lower frames 131, and the second folding link 162 is fixed to the connecting rod 134.

The connecting rod 134 and the footrest lower frame 131 are coupled to each other via a pin 139, and a guide hole 131a into which the pin 139 is inserted and moved may be formed in the footrest lower frame 131.

When the leg support portion 130 is unfolded, the second folding link 162 is moved upward with respect to the seat support 110 and the first folding link 161. Accordingly, the connecting rod 134 pushes the transport rod 132 when the leg support portion 130 is unfolded, and accordingly, the footrest 133 is moved downward. Also, when the leg support portion 130 is erected by the folding driving unit 160, the footrest 133 is pulled by the connecting rod 134 and moved upward.

As described above, according to the embodiment, when the leg support portion 130 is unfolded, the footrest 133 is moved downward to minimize the inconvenience of feet, and when the leg support portion 130 is erected, the footrest is moved upward to stably support the feet.

In addition, the backrest frame 121 includes an upper protrusion 121a that protrudes in the width direction and is coupled to the first folding link 161, the second folding link 162 is coupled to the lower end of the backrest frame 121, and the first folding link 161 is coupled to the upper protrusion 121a.

The backrest frame 121 and the footrest upper frame 136 are arranged parallel to each other, and the first folding link 161 and the second folding link 162 are arranged parallel to each other to form the parallelogram link structure. That is, the coupling points of the footrest upper frame 136 and a backrest frame 121 connected to the first folding link 161 and the second folding link 162 are respectively located at four vertices of the parallelogram.

A first distance d₁ between the pair of footrest lower frames 131 may be less than a second distance d₂ between a pair of slider rods 122. Also, the width of the footrest 133 along the first distance d₁ between the pair of footrest lower frames 131 may be also less than a width of the backrest plate 125 in the same direction. Accordingly, when the base 170 is coupled to the wheelchair or the wheel frame while stably supporting the back of the user, the footrest lower frames 131 and the footrest 133 are located between two wheels of the wheelchair, thereby facilitating the attachment/detachment to/from the wheelchair or wheel frame.

An armrest 180 is rotatably installed on the folding driving unit 160, and the armrest 180 is rotatably coupled to the first folding link 161 and supported by the second folding link 162. The armrest 180 supports the arm of the user, and the control panel 183 for controlling the wheelchair may be installed on the armrest 180.

The armrest 180 may include an armrest base 181 on which the arm of the user is seated, and an armrest frame 182 that protrudes downward from the armrest base 181 and is coupled to the first folding link 161. A position protrusion 185 protruding backward is formed on the armrest frame 182, and a support pillar 166 that is coupled to the position protrusion 185 to support the position protrusion 185 may be formed on the second folding link 162.

The support pillar 166 restricts excessive rotation of the armrest 180 and supports the armrest 180. A fixing magnet 187 is installed on the position protrusion 185, and the support pillar 166 may include a magnetic body coupled to the fixing magnet 187. Accordingly, the support pillar 166 and the position protrusion 185 attract each other by means of the magnetic force, and then the armrest frame 182 and the second folding link 162 may be easily coupled to each other.

Also, a positioning magnet 167 is installed on the first folding link 161, and a magnetic plate 186 coupled to the positioning magnet is installed on the armrest frame 182. Accordingly, after the armrest 180 escapes from the support pillar 166 and rotates, the magnetic plate 186 and the positioning magnet 167 are coupled to each other so as to support the armrest 180.

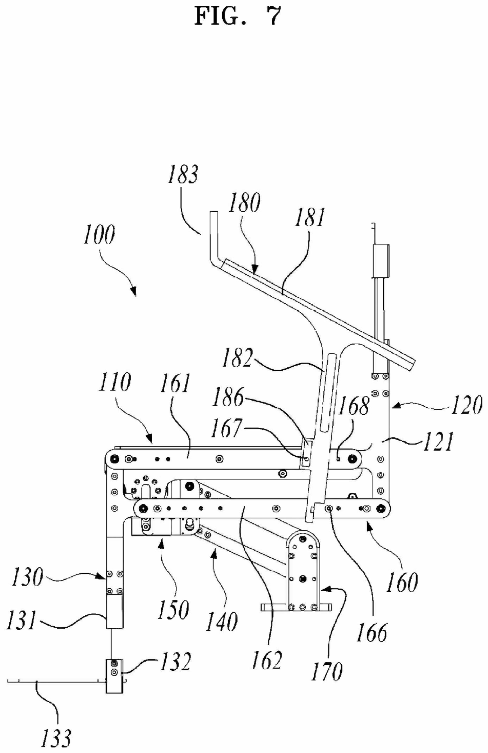

In general, it is very difficult to separate the magnet in a direction perpendicular to a bonding surface, but the magnet and the magnetic body may be easily separated when rotating the magnet from the bonding surface. Accordingly, as shown in FIG. 7, the armrest 180 may be easily rotated without exerting a lot of force even when the positioning magnet 167 and the magnetic plate 186 are coupled to each other, and moreover, after the armrest 180 is rotated, the magnetic plate 186 and the positioning magnet 167 are coupled and stably positioned at a set position.

In addition, a limit protrusion 168 that controls the rotation of the armrest is installed on the first folding link 161, and the limit protrusion 168 prevents the excessive rotation of the armrest 180.

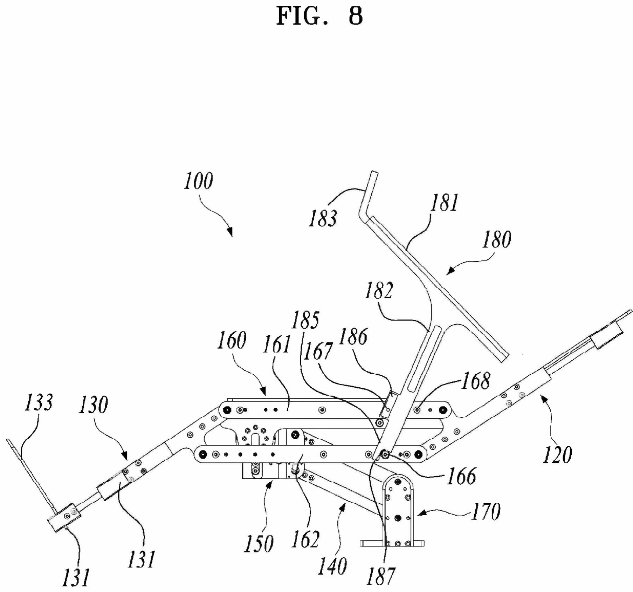

FIG. 8 is a sideview showing a posture changing apparatus for a wheelchair, according to an embodiment of the present disclosure, in a laid state.

As shown in FIG. 8, when the folding cylinder 163 pushes the second folding link 162 forward and the posture changing apparatus is laid, the armrest 180 may rotate relative to the first folding link 161 due to the support pillar 166. In this case, because the backrest portion 120 and the leg support portion 130 descend with respect to the wheelchair, the armrest 180 descends to some degree, but the descending degree of the armrest 180 is insignificant. However, the armrest 180 is rotated and maintains the nearly perpendicular angle with respect to the backrest portion 120 so that the user may comfortably place the arms, and moreover, the control panel 183 may be easily manipulated.

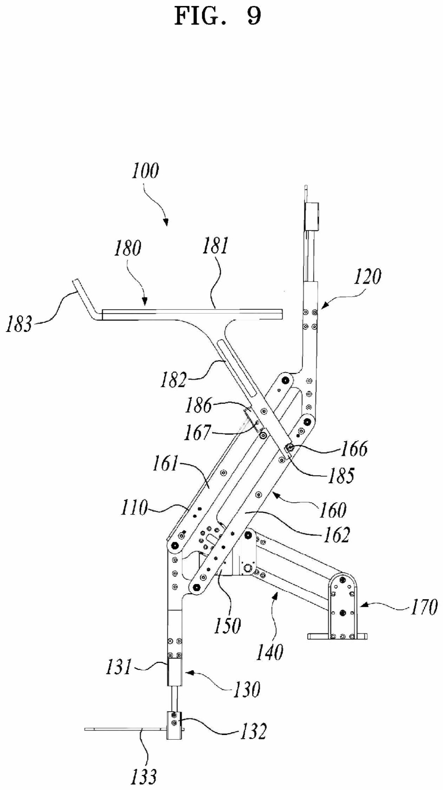

FIG. 9 is a side view showing the posture changing apparatus for a wheelchair, according to an embodiment of the present disclosure, in an erected state.

As shown in FIG. 9, when the folding cylinder 163 pushes the second folding link 162 forward and the rotation driving unit 150 rotates the seat support 110 via the first folding link 161, the posture changing apparatus is erected, and in this case, the armrest 180 may be rotated with respect to the first folding link 161 by the support pillar 166 and may maintain the nearly perpendicular angle with respect to the backrest portion 120.

As described above, the posture changing apparatus for a wheelchair according to the embodiment may easily perform the posture change such as seating posture, erected posture, front tilting, back tilting, reclining, etc., thereby improving user's convenience.

Also, the first vertical movement link 141 and the second vertical movement link 142 form the parallelogram link structure and the first folding link 161 and the second folding link 162 form the parallelogram link structure, and thus, a lightweight and compact apparatus may be configured by means of two parallelogram link structures and easily modularized due to small support area. Also, the vertical movement spring 145 and the folding springs 164 and 165 are provided, and thus, a gravitational torque caused due to relative motions between joints may be structurally absorbed and the load may be independently compensated for with respect to each joint.

Also, because the armrest 180 is rotated during the movement of the first folding link 161 and the second folding link 162, the rotation position of the armrest 180, which is suitable for the user, may be provided even in the posture changing process such as erection, reclining, etc. Also, the user may manually rotate the armrest 180 and fix the armrest to a desired position as necessary.

Although the embodiment of the present disclosure has been described, it will be appreciated by those skilled in the art that the present disclosure may be variously modified and changed by adding, changing, or removing constituent components without departing from the scope of the present disclosure described in the claims, and the modifications or changes fall within the scope of the present disclosure.

## Claims

1. A posture changing apparatus having armrests for wheelchair, the posture changing apparatus comprising:
a seat support supporting hips of a user;
a leg support portion extending downward from the seat support and installed to be rotatable with respect to the seat support;
a backrest portion extending upward from the seat support and installed to be rotatable with respect to the seat support;
a base disposed under the seat support and supporting the seat support;
folding driving units rotating the leg support portion and the backrest portion with respect to the seat support; and
armrests rotatably coupled to the folding driving units,
wherein the folding driving units each comprise a first folding link and a second folding link that are rotatably coupled to the backrest portion and the leg support portion and are spaced apart from each other in a height direction of the leg support portion, and
each of the armrests is rotatably coupled to the first folding link, and is supported by the second folding link.

2. The posture changing apparatus of claim 1, wherein
each of the armrests has a position protrusion that protrudes backward, and the second folding link has a support pillar that is coupled to the position protrusion so as to support the position protrusion.

3. The posture changing apparatus of claim 2, wherein
a fixing magnet is installed on the position protrusion, the fixing magnet being coupled to the support pillar via a magnetic force.

4. The posture changing apparatus of claim 1, wherein
the armrest comprises an armrest base on which an arm of a user is seated, and an armrest frame protruding from the armrest base and coupled to the first folding link, and
a positioning magnet is installed on the first folding link, and a magnetic plate coupled to the positioning magnet is installed on the armrest frame.

5. The posture changing apparatus of claim 1, further comprising
a vertical movement driving unit that vertically moves the seat support with respect to the base, and a rotation driving unit that rotates the seat support with respect to the vertical movement driving unit.

6. The posture changing apparatus of claim 5, wherein
one end portion of each of the folding driving units in a lengthwise direction is fixed to the backrest portion, and an opposite end portion of the folding driving unit in the lengthwise direction is fixed to the leg support portion.

7. The posture changing apparatus of claim 6, wherein
each of the folding driving units comprises a folding cylinder of which one end portion in a lengthwise direction is connected to the first folding link and an opposite end portion in the lengthwise direction is connected to the second folding link.

8. The posture changing apparatus of claim 7, wherein
a folding spring pushing the second folding link against the first folding link is installed on the first folding link and the second folding link.

9. The posture changing apparatus of claim 5, wherein
the leg support portion comprises a footrest upper frame connected to the first folding link and the second folding link, the backrest portion comprises a backrest frame connected to the first folding link and the second folding link, and
coupling points of the footrest upper frame and the backrest frame that are connected to the first folding link and the second folding link are located respectively on four vertices of a parallelogram.

10. The posture changing apparatus of claim 5, wherein
the rotation driving unit is coupled to a side surface of the first folding link, and the vertical movement driving unit is coupled to a rear surface of the rotation driving unit.

11. The posture changing apparatus of claim 10, wherein
the rotation driving unit connects the vertical movement driving unit to the folding driving units and rotates the seat support via the folding driving unit.

12. The posture changing apparatus of claim 5, wherein
two of the folding driving units are installed under the seat support, and the vertical movement driving unit is installed between the folding driving units that are spaced apart from each other.

13. The position changing apparatus of claim 2, wherein
the vertical movement driving unit comprises a first vertical movement link connecting the base to the rotation driving unit, a second vertical movement link connecting the base to the rotation driving unit and being spaced apart from the first vertical movement link, and a vertical movement cylinder of which one end portion in a lengthwise direction is connected to the first vertical movement link and an opposite end portion in the lengthwise direction is connected to the second vertical movement link.

14. The posture changing apparatus of claim 13, wherein
a vertical movement spring pushing the second vertical movement link against the first vertical movement link is installed on the first vertical movement link and the second vertical movement link.

15. The posture changing apparatus of claim 13, wherein
connecting points of the rotation driving unit and the base that are connected to the first vertical movement link and the second vertical movement link are located at four vertices of a parallelogram.

16. The posture changing apparatus of claim 1, wherein
the leg support portion comprises a footrest upper frame connected to the first folding link and the second folding link, a pair of footrest lower frames connected to a lower portion of the footrest upper frame, transport rods that are respectively inserted into the pair of footrest lower frames and installed to be movable in a lengthwise direction of the footrest lower frames, footrests connected to lower portions of the transport rods and supporting feet of a user, and a connecting rod coupled to upper portions of the transfer rods so as to connect the transfer rod to the second folding link.

17. The posture changing apparatus of claim 16, wherein
the backrest comprises a backrest frame connected to the first folding link and the second folding link, a pair of slider rods that are inserted into the backrest frame and installed to be movable in a lengthwise direction of the backrest frame, a backrest plate coupled to the slider rods and supporting user's back, and transport rods respectively coupled to the pair of slider rods and connecting the slider rods to the second folding link.

18. The posture changing apparatus of claim 17, wherein
a first distance between the pair of footrest lower frames is less than a second distance between the pair of slider rods.
